# EUROPEAN PATENT SPECIFICATION

(11) **EP 4 218 507 B1**
(45) Date of publication and mention of the grant of the patent: **21.01.2026**
(21) Application number: 23153540.2
(22) Date of filing: 26.01.2023
(51) Int. Cl.: A47J 31/06, A47J 42/08, A47J 42/18, A47J 42/44

(54) **FILTER HOLDER AND COFFEE GRINDER-DOSER WITH SAID FILTER HOLDER**
FILTERHALTER UND KAFFEEMÜHLENDOSIERER MIT DIESEM FILTERHALTER
PORTE-FILTRE ET MOULIN À CAFÉ-DOSEUR DOTÉ DUDIT PORTE-FILTRE

(30) Priority: 28.01.2022 IT 202200001493
(43) Date of publication of application: 02.08.2023
(73) Proprietor: Cimbali Group S.p.A., 20082 Binasco (MI) (IT)
(72) Inventor: Villa, Ettore, 20082 Binasco MI (IT)
(74) Representative: Perani & Partners S.p.A.

(56) References cited:
- EP-A1- 2 314 188
- EP-A1- 3 865 021
- FR-A1- 2 945 427
- IT-A1- UB20 150 945
- US-A1- 2017 245 674

## Description

### Technical Field

The present invention relates to a filter holder and a coffee grinder-doser with said filter holder.

### State of the art

In the state of the art, the need to grind roasted coffee beans to obtain a coffee powder endowed with an appropriate particle size distribution is known. This operation is typically carried out in the premises used for the administration of beverages and in particular coffee.

The particle size of the powder depends on the type of coffee that must be made. As is known, coffee powder, obtained by grinding roasted coffee beans, must be finer if it is intended for the preparation of an espresso coffee than the one necessary for the preparation of an American coffee.

To achieve this purpose, it is necessary to have a coffee grinder in which the distance of the grinders, suitable for grinding the coffee beans, can be adjusted automatically depending on the beverage that must be prepared by means of the coffee machine on which the filter holder will be placed.

However, this solution is often not enough to make the process automatic. It is necessary to ensure that the filter holder used for the preparation of the beverage, for example for the preparation of American coffee, is recognized as such by the grinder so that the latter can reposition the grinders at the correct distance to obtain the corresponding grinding.

The application of a recognition device associated with a filter holder and of a detection device associated with a coffee grinder-doser is known in the state of the art.

EP 280594 discloses a marked filter holder adapted to be recognized by a coffee machine or by a grinder. The recognition element applied on the filter holder may be of magnetic, bar, colour type or the like.

More recent solutions include the use of more reliable and above all more flexible technologies. Typically they involve applying an RFID device associated with the filter holder and an RFID reader housed in the coffee grinder.

For example FR 2945427 describes a filter holder on the cup of which there is an RFID identification plate enclosed in a removable protection capsule.

IT102014902282835 instead describes a filter holder equipped with an RFID identification plate positioned on the handle of the filter holder. The solution described in this document prevents the RFID plate from being damaged during the removal of the used coffee ground from the filter holder. In fact, this operation provides that the operator energetically hits the cup of the filter holder on a hinge present in the discharge container so as to let the coffee panel drop inside the container. In addition, the RFID plate is equipped with a removable and washable impact-resistant protection.

However, these solutions have drawbacks.

In IT102014902282835 the support ring is removably fixed. It may therefore happen that the tightening torque that characterizes the fixing of the ring on the handle of the filter holder may decrease as a result of the vibrations generated by the impacts that the cup of the filter holder inevitably undergoes due to the removal of the used coffee ground. This can result in an accidental movement of the plate which in turn can alter the effectiveness of the detection by the RFID reader.

It is also worth reminding that at the end of the working day the operator must clean and sanitize the equipment. In particular, he must clean the filter and the filter holder. The conventional procedures involve, after removing the spent coffee, separating the filter from the filter holder and placing both for 10/15 minutes in a bowl containing a solution consisting of hot water and a special detergent in order to remove the coffee residues adhering to the walls of the cup of the filter holder and of the filter. In this way it is avoided that such residues become a site of bacterial proliferation or that by becoming rancid they deteriorate the preparation of the beverage. It is not uncommon for the operator, in order to speed up the end-of-service cleaning, to carry out this operation manually. To do this, the operator must manually remove the filter holder and grip it vigorously so as to clean with a sponge the cup of the filter holder that accommodates the coffee filter. In this way it is possible that the operator may either damage the ring that supports the RFID plate or slide the ring along the handle of the filter holder decreasing the possibility of the RFID plate being read by the respective reader. The application of the RFID plate on the handle of the filter holder, as disclosed in IT102014902282835, is therefore not a good solution. ITUB20150945 A1 discloses a filter holder comprising an RFID tag being attached to the outside of the handle by means of a tag holder ring.

The solution described in FR 2945427 appears even more limiting since the plate is accommodated on the cup of the filter holder and is therefore subject to the beating of the filter holder which is necessary to eliminate the used coffee ground contained therein. Moreover, such a solution can lead to problems with particular filter holder cups and interfere with the dispensing unit during their coupling during the preparation of the beverage.

The object of the present invention is to avoid the drawbacks of the above-mentioned solutions. In particular, the object of the present invention is to realize a filter holder with an RFID tag whose features are not compromised either by the incorrect cleaning of the filter holder or by the energetic beatings that the filter holder undergoes for the removal of spent coffee. Both behaviours may result in a damage to the identification device or an alteration in the data communication between the identification device and the RFID reader device.

### SUMMARY OF THE INVENTION

The specified technical task and the specified objects are substantially achieved by a filter holder in accordance with the present invention.

In particular, the present invention proposes to house the RFID tag within the handle of the filter holder.

### LIST OF FIGURES

Further features and advantages of the present invention will become more apparent from the indicative, and therefore non-limiting, description of a preferred but not exclusive embodiment of an espresso coffee machine, as illustrated in the appended drawings, wherein:
- Figure 1 shows a coffee grinder-doser in accordance with the present invention,

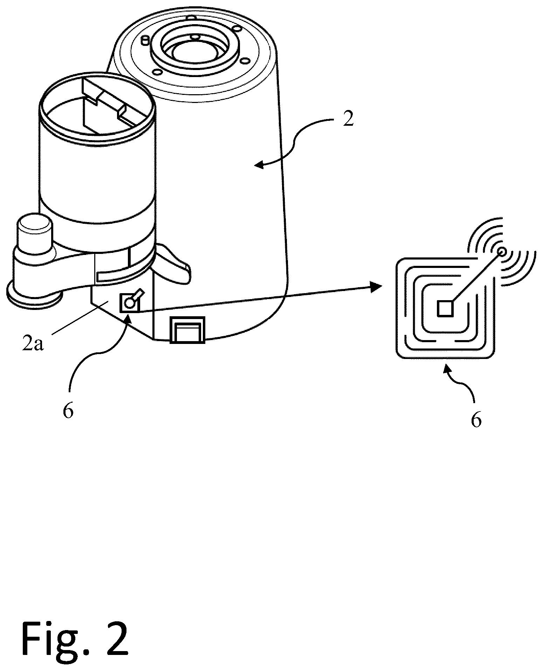

- Figure 2 shows a detail of the coffee grinder-doser of Figures 1,

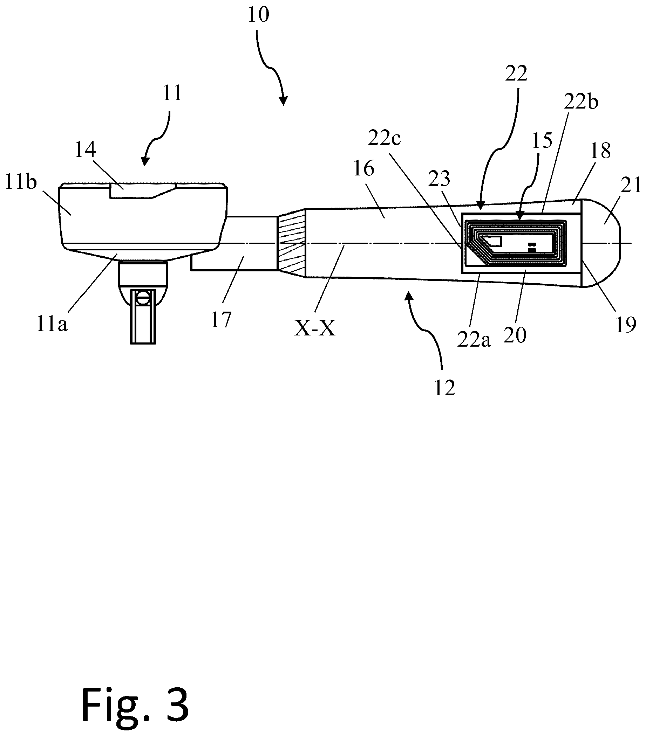

- Figure 3 shows a filter holder in accordance with the present invention,

Figure 4 shows an operating diagram of the coffee grinder-doser of the present invention.

### DETAILED DESCRIPTION

Even if not explicitly highlighted, the individual features disclosed with reference to the specific embodiments shall be understood as accessory to and/or interchangeable with other features disclosed with reference to other embodiments.

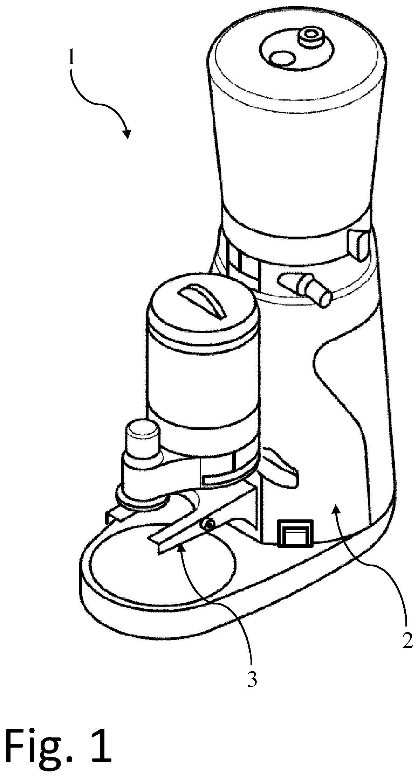

Figure 1 shows a coffee grinder-doser 1 in accordance with an embodiment of the present invention.

The coffee grinder-doser 1 comprises a frame 2 and a support element 3 for a filter holder 10.

The filter holder 10 comprises a cup-shaped body 11 connected to a handle 12 attached to the cup-shaped body 11 which allows it to be moved.

In a first embodiment, the handle 12 is removably attached to the cup-shaped body 11 by a threaded coupling.

In a second embodiment, the handle 12 is removably attached to the cup-shaped body 11 by vibration damping members configured to dampen vibrations following angular bending of the handle 12 with respect to the cup-shaped body. 11.

In the example, the cup-shaped body 11 is delimited below by a bottom 11a and laterally by a frusto-conical wall 11b.

The filter holder 10 comprises a filter 13 inserted in the cup-shaped body 11 and configured to contain a predetermined dose of ground coffee.

For example, the filter 13 is inserted in the cup-shaped body 11 between the bottom 11a and the frusto-conical wall 11b and blocked by an elastic ring interposed between the cup-shaped body 11 and the filter 13.

In accordance with one embodiment, the filter holder 10 comprises a pair of fins 14 projecting from the cup-shaped body 11, and configured to allow the filter holder 10 to be hooked to a dispensing unit of a coffee machine.

The filter holder 10 also comprises an RFID tag 15 associated with the handle 12.

The RFID tag 15 is configured to generate an identification signal S_{id} following receipt of an activation signal Sᵣ from an RFID reader. This aspect will be described in more detail in the following description with reference to the coffee grinder-doser 1.

Preferably, the identification signal S_{id} is representative of at least one of a dose value of ground coffee, a particle size value of ground coffee, a type of ground coffee blend.

The RFID tag 15 is housed inside the handle 12. In this way, the features of the RFID tag are not compromised either by the incorrect cleaning of the filter holder or by the energetic beatings that the filter holder has to cope with for the removal of used coffee ground. Housing the RFID tag 15 inside the handle 12 prevents possible damage thereof or alterations in the data communication between the RFID tag 15 itself and the RFID reader device.

In accordance with one embodiment, the handle 12 comprises a tubular body 16 extending in a longitudinal direction X-X between a first end portion 17 attached to the cup-shaped body 11 and a second end portion 18 defining an access opening 19.

The tubular body 16 delimits an inner cavity 20 accessible through the access opening 19.

Such an inner cavity 20 of the tubular body 16 is configured to house the RFID tag 15 in a stable manner.

The access opening 19 allows to house and remove, where necessary, the RFID tag 15, for example in case of maintenance.

In accordance with an embodiment, the handle 12 comprises a closing element 21 removably associated with the access opening 19 for closing and opening the access opening 19 itself.

The closing element 21 can be applied by pressure to the access opening 19 or by a threaded coupling.

In accordance with one embodiment, the inner cavity 20 comprises engagement members 22 configured to engage the RFID tag 15 and maintain the RFID tag 15 stably housed in the tubular body 16.

In a first embodiment, the engagement members 22 comprise two grooves 22a, 22b formed by opposite sides in the inner cavity 20. Such grooves 22a, 22b extend in a longitudinal direction X-X and are configured to engage opposite portions of the RFID tag 15.

In a second embodiment, the inner cavity 20 extends in a longitudinal direction X-X between the access opening 19 and a closed bottom 23. In such an embodiment, the engagement members 22 comprise a grip element 22c arranged at the closed bottom 23 and configured to engage the RFID tag 15 in a stable manner.

The coffee grinder-doser 1 further comprises grinding members 4, housed in the frame 2, and configured to grind coffee beans and generate ground coffee.

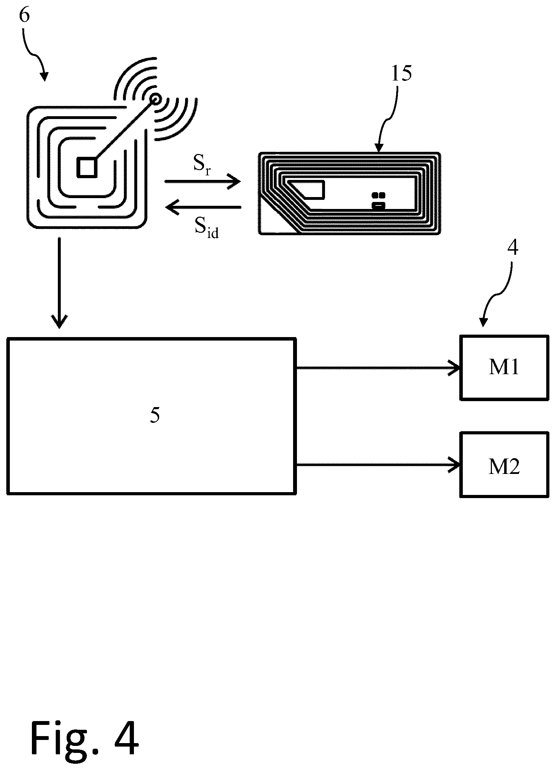

The grinding members 4 comprise a pair of grinders and respective rotation actuation members M1, schematically shown in figure 4.

In a preferred embodiment, the grinding members 4 also comprise adjustment members M2 configured to adjust the mutual distance of the pair of grinders.

The coffee grinder-doser 1 comprises an electronic control unit 5 connected to the grinding members 4 and configured to generate control signals S_{c} to control the grinding members 4 themselves.

The coffee grinder-doser 1 further comprises an RFID reader 6 configured to generate an activation signal Sᵣ of the RFID tag 15 of the filter holder 10, detect the identification signal S_{id} emitted by the RFID tag following receipt of the activation signal Sᵣ and send the identification signal S_{id} to the control unit.

The electronic control unit 5 is configured to generate the control signals S_{c} on the basis of the identification signal S_{id} received from the RFID reader 6.

In accordance with an embodiment, the control unit 5 is configured to generate an adjustment control signal to adjust the distance of the pair of grinders and an actuation control signal to activate and deactivate the rotation actuation members of the grinders and to control the rotation speed thereof.

In one embodiment, the RFID reader 6 is associated with the frame 2 and arranged in such a way that there can be signal communication between the RFID tag 15 and the RFID reader 6, when the filter holder 10 is arranged on the support element 3, in particular so that the activation signal Sᵣ reaches the RFID tag 15 and the identification signal S_{id} emitted by the RFID tag 15 reaches the RFID reader 6. Such signal communication is possible as long as the air distance between the RFID tag 15 and the RFID reader 6 is less than 20 cm.

Preferably, the RFID reader 6 is positioned on a front part 2a of the frame 2, at the support element 3.

Preferably, the RFID reader 6 is configured to generate an activation signal Sᵣ with an operating frequency chosen in a range comprised between 10 MHz and 20 MHz and more preferably between 10 MHz and 15 MHz.

The choice of the frequency field is such as to allow the electromagnetic field of the activation signal Sᵣ to cross the thickness of the material, preferably plastic or wood of the handle 12.

The RFID reader 6 can be activated when a proximity sensor, fitted on the coffee grinder-doser 1, detects the presence of the filter holder 10 or as soon as the coffee grinder-doser 1 is in working mode, i.e. when it is powered.

In use, when preparing a beverage, the operator takes the filter holder 10 equipped with the filter 13 corresponding to the beverage to be prepared. Said filter 13 can simply be chosen based on the dose but it can also be chosen based on the coffee blend or based on the beverage preparation recipe.

As soon as the filter holder 10 reaches a position with respect to the coffee grinder-doser 1 such as to allow the RFID tag 15 to receive the activation signal Sᵣ emitted by the RFID reader 6, the RFID tag 15 emits the identification signal S_{id}. The RFID reader 6 transmits the identification signal to the electronic control unit 5 which in turn controls the grinding members 4 as described above.

## Claims

1. Filter holder (10), comprising:
- a cup-shaped body (11),
- a filter (13) inserted into the cup-shaped body (11) and configured to contain ground coffee,
- a handle (12) attached to the cup-shaped body (11),
- an RFID tag (15) associated with the handle (12), the RFID tag (15) being configured to generate an identification signal upon receipt of an activation signal from an RFID reader (6), the identification signal being representative of at least one of a dose value of ground coffee, a particle size value of ground coffee, a type of ground coffee blend, **characterized in that** the RFID tag (15) is housed inside the handle (12).

2. Filter holder (10) according to claim 1, wherein:
- the handle (12) comprises a tubular body (16) extending in a longitudinal direction (X-X) between a first end portion (17) attached to the cup-shaped body (11) and a second end portion (18) defining an access opening (19),
- the tubular body (16) delimits an inner cavity (20) accessible through the access opening (19),
- the inner cavity (20) of the tubular body (16) is configured to house the RFID tag (15) in a fixed manner.

3. Filter holder (10) according to claim 2, wherein:
- the handle (12) includes a closing element (21) removably associated with the access opening (19) for closing and opening the access opening.

4. Filter holder (10) according to claim 2 or 3, wherein:
- the inner cavity (20) comprises engagement members (22) configured to engage the RFID tag (15) and maintain the RFID tag stably housed in the tubular body (16).

5. Filter holder (10) according to claim 4, wherein:
- the engagement members (22) comprise two grooves (22a, 22b) located on opposite sides in the inner cavity,
- the grooves (22a, 22b) extend in a longitudinal direction (X-X) and are configured to engage opposite portions of the RFID tag (15).

6. Filter holder (10) according to claim 4, wherein:
- the inner cavity (20) extends in a longitudinal direction (X-X) between the access opening (19) and a closed bottom (23),
- the engagement members (22) comprise a grip element (22c) arranged at the closed bottom (23) and configured to engage the RFID tag (15) in a fixed manner.

7. Filter holder (10) according to any one of claims 1 to 6, wherein the handle (12) is removably attached to the cup-shaped body (11) by a threaded coupling.

8. Filter holder (10) according to any one of claims 1 to 6, wherein the handle (12) is removably attached to the cup-shaped body (11) by vibration damping members configured to dampen vibrations following angular bending of the handle with respect to the cup-shaped body (11).

9. Coffee grinder-doser (1) comprising:
- a frame (2) and a support element (3) for a filter holder,
- grinding members (4) housed in the frame (2) and configured to grind coffee beans, said grinding members (4) comprising a pair of grinders,
- an electronic control unit (5) connected to the grinding members (4) and configured to generate control signals to control the grinding members (4),
- a filter holder (10) according to any one of claims 1 to 8, the filter holder (10) being positionable in a removable way on the support element (3),
- an RFID reader (6) configured to generate an activation signal of the RFID tag of the filter holder, detect the identification signal emitted by the RFID tag following receipt of the activation signal and send the identification signal to the control unit (5), wherein the control unit (5) is configured to generate the control signals on the basis of the identification signal received from the RFID reader (6).

10. Coffee grinder-doser (1) according to claim 9, wherein:
- the control unit (5) is configured to generate an adjustment control signal to adjust the distance of the pair of grinders and an actuation control signal to activate and deactivate the rotation of the grinders.

11. Coffee grinder-doser (1) according to claim 9 or 10, wherein:
- the RFID reader (6) is associated with the frame (2) and arranged in such a way that the activation signal of the RFID tag (5) reaches the RFID tag (5) when the filter holder (10) is placed on the support element (3).

## Patentansprüche

1. Filterträger (10), umfassend:
- einen tassenförmigen Körper (11),
- einen Filter (13), der in den tassenförmigen Körper (11) eingesetzt und dazu konfiguriert ist, Kaffeepulver aufzunehmen,
- einen Handgriff (12), der an dem tassenförmigen Körper (11) angebracht ist,
- einen RFID-Tag (15), der dem Handgriff (12) zugeordnet ist, wobei der RFID-Tag (15) dazu konfiguriert ist, bei Empfang eines Aktivierungssignals von einem RFID-Lesegerät (6) ein Identifikationssignal zu erzeugen, wobei das Identifikationssignal für mindestens eines von einem Dosiswert von Kaffeepulver, einem Partikelgrößenwert von Kaffeepulver oder einem Typ einer Kaffeepulvermischung repräsentativ ist, **dadurch gekennzeichnet, dass** der RFID-Tag (15) im Inneren des Handgriffs (12) untergebracht ist.

2. Filterträger (10) nach Anspruch 1, wobei:
- der Handgriff (12) einen rohrförmigen Körper (16) umfasst, der sich in einer Längsrichtung (X-X) zwischen einem ersten Endabschnitt (17), der an dem tassenförmigen Körper (11) angebracht ist, und einem zweiten Endabschnitt (18), der eine Zugangsöffnung (19) definiert, erstreckt,
- der rohrförmige Körper (16) einen inneren Hohlraum (20) begrenzt, der durch die Zugangsöffnung (19) zugänglich ist,
- der innere Hohlraum (20) des rohrförmigen Körpers (16) dazu konfiguriert ist, den RFID-Tag (15) fest unterzubringen.

3. Filterträger (10) nach Anspruch 2, wobei:
- der Handgriff (12) ein Verschlusselement (21) beinhaltet, das zum Schließen und Öffnen der Zugangsöffnung entfernbar der Zugangsöffnung (19) zugeordnet ist.

4. Filterträger (10) nach Anspruch 2 oder 3, wobei:
- der innere Hohlraum (20) Eingriffselemente (22) umfasst, die dazu konfiguriert sind, mit dem RFID-Tag (15) in Eingriff zu treten und den RFID-Tag stabil in dem rohrförmigen Körper (16) untergebracht zu halten.

5. Filterträger (10) nach Anspruch 4, wobei:
- die Eingriffselemente (22) zwei Nuten (22a, 22b) umfassen, die sich an gegenüberliegenden Seiten in dem inneren Hohlraum befinden,
- die Nuten (22a, 22b) sich in einer Längsrichtung (X-X) erstrecken und dazu konfiguriert sind, mit gegenüberliegenden Abschnitten des RFID-Tags (15) in Eingriff zu treten.

6. Filterträger (10) nach Anspruch 4, wobei:
- der innere Hohlraum (20) sich in einer Längsrichtung (X-X) zwischen der Zugangsöffnung (19) und einem geschlossenen Boden (23) erstreckt,
- die Eingriffselemente (22) ein Greifelement (22c) umfassen, das an dem geschlossenen Boden (23) angeordnet und dazu konfiguriert ist, den RFID-Tag (15) fest in Eingriff zu nehmen.

7. Filterträger (10) nach einem der Ansprüche 1 bis 6, wobei der Handgriff (12) mittels einer Gewindekopplung entfernbar an dem tassenförmigen Körper (11) angebracht ist.

8. Filterträger (10) nach einem der Ansprüche 1 bis 6, wobei der Handgriff (12) mittels schwingungsdämpfender Elemente, die dazu konfiguriert sind, Schwingungen infolge einer winkligen Biegung des Handgriffs in Bezug auf den tassenförmigen Körper (11) zu dämpfen, entfernbar an dem tassenförmigen Körper (11) angebracht ist.

9. Kaffeemühle-Dosierer (1), umfassend:
- einen Rahmen (2) und ein Stützelement (3) für einen Filterträger,
- Mahlelemente (4), die in dem Rahmen (2) untergebracht und zum Mahlen von Kaffeebohnen konfiguriert sind, wobei die besagten Mahlelemente (4) ein Paar von Mahlscheiben umfassen,
- eine elektronische Steuereinheit (5), die mit den Mahlelementen (4) verbunden und dazu konfiguriert ist, Steuersignale zur Steuerung der Mahlelemente (4) zu erzeugen,
- einen Filterträger (10) nach einem der Ansprüche 1 bis 8, wobei der Filterträger (10) auf entfernbarer Weise auf dem Stützelement (3) positionierbar ist,
- ein RFID-Lesegerät (6), das dazu konfiguriert ist, ein Aktivierungssignal für den RFID-Tag des Filterträgers zu erzeugen, das von dem RFID-Tag nach Empfang des Aktivierungssignals emittierte Identifikationssignal zu detektieren und das Identifikationssignal an die Steuereinheit (5) zu senden,
wobei die Steuereinheit (5) dazu konfiguriert ist, die Steuersignale auf der Grundlage des von dem RFID-Lesegerät (6) empfangenen Identifikationssignals zu erzeugen.

10. Kaffeemühle-Dosierer (1) nach Anspruch 9, wobei:
- die Steuereinheit (5) dazu konfiguriert ist, ein Einstellsteuersignal zum Einstellen des Abstands des Paars von Mahlscheiben und ein Betätigungssteuersignal zum Aktivieren und Deaktivieren der Drehung der Mahlscheiben zu erzeugen.

11. Kaffeemühle-Dosierer (1) nach Anspruch 9 oder 10, wobei:
- das RFID-Lesegerät (6) dem Rahmen (2) zugeordnet und derart angeordnet ist, dass das Aktivierungssignal für den RFID-Tag (15) den RFID-Tag (15) erreicht, wenn der Filterträger (10) auf dem Stützelement (3) platziert ist.

## Revendications

1. Porte-filtre (10), comprenant :
- un corps en forme de coupelle (11),
- un filtre (13) inséré dans le corps en forme de coupelle (11) et configuré pour contenir du café moulu,
- une poignée (12) fixée au corps en forme de coupelle (11),
- une étiquette RFID (15) associée à la poignée (12), l'étiquette RFID (15) étant configurée pour générer un signal d'identification à la réception d'un signal d'activation provenant d'un lecteur RFID (6), le signal d'identification étant représentatif d'au moins un élément parmi une valeur de dose de café moulu, une valeur de granulométrie de café moulu, un type de mélange de café moulu, **caractérisé en ce que** l'étiquette RFID (15) est logée à l'intérieur de la poignée (12).

2. Porte-filtre (10) selon la revendication 1, dans lequel:
- la poignée (12) comprend un corps tubulaire (16) s'étendant dans une direction longitudinale (X-X) entre une première partie d'extrémité (17) fixée au corps en forme de coupelle (11) et une seconde partie d'extrémité (18) définissant une ouverture d'accès (19),
- le corps tubulaire (16) délimite une cavité intérieure (20) accessible par l'ouverture d'accès (19),
- la cavité intérieure (20) du corps tubulaire (16) est configurée pour loger l'étiquette RFID (15) de manière fixe.

3. Porte-filtre (10) selon la revendication 2, dans lequel:
- la poignée (12) inclut un élément de fermeture (21) associé de manière amovible à l'ouverture d'accès (19) pour fermer et ouvrir l'ouverture d'accès.

4. Porte-filtre (10) selon la revendication 2 ou 3, dans lequel:
- la cavité intérieure (20) comprend des éléments d'engagement (22) configurés pour venir en prise avec l'étiquette RFID (15) et maintenir l'étiquette RFID logée de manière stable dans le corps tubulaire (16).

5. Porte-filtre (10) selon la revendication 4, dans lequel:
- les éléments d'engagement (22) comprennent deux rainures (22a, 22b) situées sur des côtés opposés dans la cavité intérieure,
- les rainures (22a, 22b) s'étendent dans une direction longitudinale (X-X) et sont configurées pour venir en prise avec des parties opposées de l'étiquette RFID (15).

6. Porte-filtre (10) selon la revendication 4, dans lequel:
- la cavité intérieure (20) s'étend dans une direction longitudinale (X-X) entre l'ouverture d'accès (19) et un fond fermé (23),
- les éléments d'engagement (22) comprennent un élément de préhension (22c) agencé au niveau du fond fermé (23) et configuré pour venir en prise avec l'étiquette RFID (15) de manière fixe.

7. Porte-filtre (10) selon l'une quelconque des revendications 1 à 6, dans lequel la poignée (12) est fixée de manière amovible au corps en forme de coupelle (11) par un raccord fileté.

8. Porte-filtre (10) selon l'une quelconque des revendications 1 à 6, dans lequel la poignée (12) est fixée de manière amovible au corps en forme de coupelle (11) par des éléments d'amortissement de vibrations configurés pour amortir les vibrations consécutives à une flexion angulaire de la poignée par rapport au corps en forme de coupelle (11).

9. Moulindoseur à café (1) comprenant :
- un châssis (2) et un élément de support (3) pour un porte-filtre,
- des éléments de broyage (4) logés dans le châssis (2) et configurés pour broyer des grains de café, lesdits éléments de broyage (4) comprenant une paire de meules,
- une unité de commande électronique (5) connectée aux éléments de broyage (4) et configurée pour générer des signaux de commande pour commander les éléments de broyage (4),
- un porte-filtre (10) selon l'une quelconque des revendications 1 à 8, le porte-filtre (10) étant positionnable de manière amovible sur l'élément de support (3),
- un lecteur RFID (6) configuré pour générer un signal d'activation de l'étiquette RFID du porte-filtre, détecter le signal d'identification émis par l'étiquette RFID à la suite de la réception du signal d'activation et envoyer le signal d'identification à l'unité de commande (5),
dans lequel l'unité de commande (5) est configurée pour générer les signaux de commande sur la base du signal d'identification reçu du lecteur RFID (6).

10. Moulindoseur à café (1) selon la revendication 9, dans lequel :
- l'unité de commande (5) est configurée pour générer un signal de commande d'ajustement pour ajuster la distance de la paire de meules et un signal de commande d'actionnement pour activer et désactiver la rotation des meules.

11. Moulindoseur à café (1) selon la revendication 9 ou 10, dans lequel :
- le lecteur RFID (6) est associé au châssis (2) et agencé de telle manière que le signal d'activation de l'étiquette RFID (15) atteigne l'étiquette RFID (15) lorsque le porte-filtre (10) est placé sur l'élément de support (3).
